# EUROPÄISCHE PATENTSCHRIFT

(11) **EP 1 736 665 B1**
(45) Veröffentlichungstag und Bekanntmachung des Hinweises auf die Patenterteilung: **21.03.2012**
(21) Anmeldenummer: 06012962.4
(22) Anmeldetag: 23.06.2006
(51) Int. Cl.: F03D 11/00

(54) **Turmentfeuchtung einer Windenergieanlage**
Dehumidifying of the inside of a wind turbine tower.
Déshumidification de l'intérieur de la tour d'une éolienne

(30) Priorität: 24.06.2005 DE 102005029463
(43) Veröffentlichungstag der Anmeldung: 27.12.2006
(73) Patentinhaber: REpower Systems SE, 22297 Hamburg (DE)
(72) Erfinder: Uwe, Peters, 24768 Rendsburg (DE); Gawrisch, Rüdiger, 24790 Schacht-Audorf (DE)
(74) Vertreter: Groth, Wieland

(56) Entgegenhaltungen:
- WO-A1-00/68570
- DE-A1- 10 016 913
- DE-A1- 10 139 556
- DE-A1- 19 621 485
- JP-A- 1 049 829
- JP-A- 2000 024 443

## Beschreibung

Die Erfindung betrifft eine Windenergieanlage und ein Verfahren zum Trocknen in einem gegen Luftaustausch abgedichteten oder zumindest im Wesentlichen abgedichteten Innenraum einer Windenergieanlage.

Windenergieanlagen erfreuen sich zunehmender Verbreitung. Da günstige Aufstellpositionen an Land mittlerweile rar werden, werden Windenergieanlagen bevorzugt off-shore aufgestellt.

Windenergieanlagen weisen generell das Problem der Kühlung der im Maschinenhaus angeordneten Generatoren auf. In der WO 01/06121 A1 ist zur Kühlung eines Generators ein in der Windenergieanlage geschlossen zirkulierender Luftstrom vorgeschlagen, der Abwärme des Generators aufnimmt und über die Turmwandung abgibt. Durch den geschlossenen Luftkreislauf wird dem Kontakt der empfindlichen Komponenten mit salzhaltiger oder feuchter Luft entgegen gewirkt und damit auch die Korrosionsgefahr verringert.

In der DE 101 39 556 A 1 ist ein Peltier-Element offenbart, das zwischen einem ersten Element und einem zweiten Element angeordnet ist und das erste Elememt unter Umgebungstemperatur abkühlt und die in der Umgebungsluft enthaltene Feuchtigkeit dadurch an diesem Element kondensiert. Das Kondenswasser kann ablaufen und angesammelt werden.

In der WO 99/300031 ist eine on-shore Windenergieanlage offenbart, deren Generator durch einen Luftstrom gekühlt wird. Der Luftstrom wird dabei durch eine Kaminwirkung entlang des Turminnenraumes erzeugt, in dem Frischluft durch in den bodenseitigen Abschnitt der Turmwandung eingebrachte Einlassöffnungen eingesogen wird und entlang des Turminnenraumes in das Maschinenhaus strömt und dort die Abwärme des Generators aufnimmt und nach außen leitet. Die Anlage eignet sich nicht für den Einsatz im off-shore Bereich, da die im unteren Abschnitt des Turmes eingesogene Luft besonders salzhaltig und feucht ist und damit Korrosion der Turmwandung zusätzlich befördern würde.

In der DE 199 47 915 A1 ist eine Windenergieanlage offenbart, deren Komponenten ebenfalls durch einen Luftstrom gekühlt werden, wobei die zu kühlenden Bauteile am

Boden der Windenergieanlage angeordnet sind und der kühlende Luftstrom durch ein Sauggebläse in Kombination mit einer Kaminwirkung erzeugt wird. Auch dieses Kühlsystem weist Lufteinlassöffnungen im Bodenbereich auf, so dass sich ihr Einsatz im off-shore-Bereich nicht empfiehlt.

Die DE 198 59 628 C1 offenbart eine Vorrichtung zur Vermeidung des Eindringens von Salzpartikeln in den Generatorinnenraum. Dazu wird getrocknete und von Salzpartikeln befreite Luft in den gekapselten Generatorinnenraum gedrückt, um durch den sich ausbildenden Überdruck ein Eindringen salzhaltiger und feuchter Luft zu verhindern. Die zur Erzeugung eines Überdrucks im gekapselten Generatorraum eingebrachte Außenluft ist jedoch besonders feucht und salzhaltig, und sie bedarf deshalb einer intensiven trocknenden und entsalzenden Behandlung.

Alle genannten Systeme eignen sich nicht zur Entfeuchtung der im Innenraum der Windenergieanlage bereits vorhandenen Luft. Der Schutz vor Kondenswasserbildung und Korrosion ist damit begrenzt.

Der Erfindung liegt die Aufgabe zugrunde, eine Windenergieanlage und ein Verfahren zur Verfügung zu stellen, die bzw. das die Gefahr von Kondenswasserbildung und Korrosion, insbesondere im Turminnenraum, vermindert.

Die Aufgabe wird durch eine Windenergieanlage mit den Merkmalen des Anspruchs 1 gelöst. Die Erfindung macht von der Idee Gebrauch, eine Entfeuchtungseinrichtung für die Luft in einem Innenraum der Windenergieanlage zur Verfügung zu stellen und durch sie einen Trockenluftstrom in dem Innenraum zu erzeugen, der insbesondere an der Innenraumwandung sich niederschlagendes Kondenswasser absorbiert und abtransportiert. Bei dem Innenraum kann es sich um den Turminnenraum handeln oder auch um den Innenraum des Maschinenhauses oder auch um eine Kombination beider Innenräume.

Die Entfeuchtungseinrichtung ist zwischen einem Feuchtlufteinlass und einem Trockenluftauslass angeordnet. Dabei wird Luft aus dem Innenraum durch den Feuchtlufteinlass in die Entfeuchtungseinrichtung gesogen, dort entfeuchtet und durch den Trockenluftauslass wieder in den Innenraum abgegeben. Ein Luftaustausch mit der Außenluft wird dabei möglichst vermieden. Da der Innenraum gegen Luftaustausch mit der Außenluft der Windenergieanlage abgedichtet oder doch zumindest im Wesentlichen abgedichtet ist oder gekapselt ist, kann sich im Innenraum darüber hinaus eine Luftzirkulation ausbilden. Dabei strömt Trockenluft in einer Richtung, vorzugsweise in Turmlängsrichtung vom meeresbodenseitigen Ende zum maschinenhausseitigen Ende des Turminnenraumes, durch den Turminnenraum. Der abgedichtete oder zumindest im Wesentlichen gegen Luftaustausch abgedichtete Innenraum unterstützt die Luftzirkulation durch die Ausbildung eines Unterdruckbereichs beim Frischlufteinlass und eines Überdruckbereichs beim Trockenluftauslass. Dabei sind herkömmliche Türme einer Windenergieanlage in diesem Sinne auch als gegen Luftaustausch im Wesentlichen abgedichtet zu verstehen. Der sich durch das Druckgefälle ausbildende Luftstrom trocknet. Der Luftstrom streicht beispielsweise an der Turminnenwandung vorbei und trocknet die Turminnenwandung, wirkt also einer Kondenswasserbildung an der Turminnenwandung entgegen. Darüber hinaus streicht der trocknende Luftstrom auch an im Turminnenraum angeordneten Bauteilen vorbei, um diese zu trocknen.

In einer ersten Ausführungsform der Erfindung ist der Turminnenraum nach außen abgedichtet, während in der zweiten Ausführungsform der Erfindung der Innenraum des Maschinenhauses nach außen abgedichtet ist. In einer bevorzugten Kombination beider Ausführungsformen sind Innenraum von Turm- und Maschinenhaus zusammen nach außen abgedichtet, wobei ein Luftaustausch zwischen den beiden Innenräumen stattfinden kann.

In der bevorzugten Ausführungsform der Erfindung weist die Windenergieanlage neben der Entfeuchtungseinrichtung für den Innenraum des Turmes eine zusätzliche Entfeuchtungseinrichtung für den Innenraum des Maschinenhauses auf. Die Entfeuchtungseinrichtung ist günstiger Weise im oberen, dem Maschinenhaus benachbarten Abschnitt des Turminnenraumes, günstigstenfalls unterhalb einer oberen Plattform vorgesehen. Dabei ist die Entfeuchtungseinrichtung auf der oberen Plattform vorgesehen, während der Feuchtlufteinlass und der Trockenluftauslass unterhalb der oberen Plattform vorgesehen sind, während die zusätzliche Entfeuchtungseinrichtung im unteren, dem Boden bzw. der Meeresoberfläche zugewandten Bereich des Maschinenhausinnenraumes angeordnet ist. Am Boden des Maschinenhauses ist die Innenluft etwas kühler als unter dem Dach. Kühle Luft lässt sich insbesondere mit einem vorzugsweise verwendeten Adsorptionsentfeuchter effektiver entfeuchten als warme Luft.

Die zusätzliche Entfeuchtungseinrichtung umfasst auch einen Feuchtlufteingang und einen Trockenluftausgang von dem ein Luftkanal mit ggf. mehreren Luftauslässen abgehen kann. Durch die Trockenluft sind die elektrischen und korrosionsempfindlichen Bauteile sowohl des Maschinenhauses als auch des Turminnenraumes vor Feuchtigkeit und damit vor Korrosion geschützt.

Die Luftauslässe der Trockenluft sind im Maschinenhaus günstigenfalls direkt unterhalb von feuchtigkeitsempfindlichen Bauteilen, wie Getriebe, Generator, Schaltschränke und Transformator vorgesehen. Wenigstens ein Trockenluftauslass kann im hintersten Bereich des Maschinenhausinnenraumes angeordnet sein, während der Entfeuchter mit seinem Feuchtluftausgang im vorderen, der Rotornabe zugewandten Bereich des Maschinenhausinnenhauses vorgesehen ist. Aufgrund des im Wesentlichen luftdicht abgeschlossenen Innenraumes ist damit eine Luftzirkulation in großen Bereichen des Innenraumes des Maschinenhauses erzeugbar.

Auf Lufteinlassöffnungen, zum Ansaugen von Außenluft in den Innenraum hinein, wird vorzugsweise vollständig verzichtet. Durch den geringen Luftaustausch kann die Entfeuchtungseinrichtung in ihrer Leistung kleiner und damit kostengünstiger ausgelegt werden als bei einer Entfeuchtung von ständig neu eintretender feuchterer Außenluft.

Die erfindungsgemäße Windenergieanlage kann dabei on-shore und off-shore eingesetzt werden. Durch die Abdichtung gegen die Außenluft eignet sich die erfindungsgemäße Windenergieanlage auch für den Einsatz in Wüstengegenden und anderen Gegenden mit sandhaltiger Luft.

Zur Ausbildung eines weiträumigen Luftstromes im Innenraum sind der Feuchtlufteinlass und Trockenluftauslass der Entfeuchtungseinrichtung, vorzugsweise durch einen Luftkanal, voneinander beabstandet. Der Feuchtlufteinlass ist dabei bevorzugt im Turminnenraum, im Bereich einer oberen, dem Maschinenhaus benachbarten Plattform angeordnet, und der Trockenluftauslass ist am meeresbodenseitigen Ende des Turminnenraumes angeordnet.

Die Entfeuchtungseinrichtung kann den eigentlichen Entfeuchter sowie einen neben dem Entfeuchter angeordneten Ventilator aufweisen, der, wenn er in Strömrichtung vor dem Entfeuchter angeordnet ist, Feuchtluft ansaugt und in Richtung des Entfeuchters ausbläst oder, wenn er in Stromrichtung hinter dem Entfeuchter angeordnet ist, Trockenluft aus dem Entfeuchter saugt und in einen Luftkanal drückt.

Der Übergang zwischen Ventilator, Entfeuchter und Luftkanal ist vorteilhafterweise gegen Luftaustausch abgedichtet oder doch zumindest im Wesentlichen abgedichtet.

Zwischen Feuchtlufteinlass und Trockenluftauslass ist vorteilhafterweise eine Entsalzungseinrichtung angeordnet, die der Ausbildung eines hygroskopischen Schmierfilms auf der Turminnenwandung oder Bauteilen entgegenwirkt.

Grundsätzlich kann der Entfeuchter an beliebiger Stelle an oder in der Windenergieanlage befestigt sein, vorzugsweise ist er jedoch im maschinenhausseitigen Abschnitt des Turminnenraumes angeordnet, insbesondere wenn der Entfeuchter als Adsorptionsentfeuchter ausgebildet ist. Turminnenluft wird dann als Prozessluft in den Adsorptionsentfeuchter gesogen; dort wird ihr die Feuchtigkeit entzogen und diese durch einen Regenerationsluftstrom nach außen abtransportiert. Der Adsorptionsentfeuchter weist einen Regenerationslufteingang und -ausgang in der Turmwandung auf. Es ist vorteilhaft, diese Regenerationsluftöffnungen in den maschinenhausseitigen Abschnitt der Turmwandung einzubringen, da dort geringere Biegemomente auftreten und die Stabilität der Turmwandung dort vergleichsweise weniger verringert wird, als durch Öffnungen im tragenden, meeresbodenseitigen Abschnitt der Turmwandung. Darüber hinaus ist feuchte Luft leichter als trockene Luft, und sie steigt selbständig im Innenraum des Turmes auf. Bei einem im oberen Abschnitt des Turmes angeordneten Adsorptionsentfeuchter kann somit durch Ausnutzung der Schwerkraft ein kleinerer und somit wirtschaftlicherer Ventilator verwendet werden.

Wenn statt Adsorptionsentfeuchtern keiner Regenerationsluftöffnungen bedürfende Kondensationsentfeuchter verwendet werden, wäre deren Anordnung an beliebigen Positionen der Windenergieanlage, auch im Turmfuß, sinnvoll. Die für Kondensationsentfeuchter erforderliche Kondenswasserabführung kann über eine sehr kleine Öffnung, vorzugsweise Bohrung, von beispielsweise 20mm Durchmesser in der Turmwandung nach außen erfolgen.

Generell wird die Luft mit einem Ventilator durch den Entfeuchter gedrückt oder gesogen. Es ist denkbar, den Ventilator in Stromrichtung der Luft vor und hinter dem Entfeuchter anzuordnen, im zweiten Fall vorteilhafterweise zwischen Entfeuchter und Luftkanal. Die Verbindungen zwischen den Bauteilen der Entfeuchtungseinrichtung sind entlang des Luftstromes vorzugsweise gegen Luftaustausch abgedichtet. Vorzugsweise sind die Geräte zur Erleichterung der Wartung leicht zugänglich angeordnet. Die Entfeuchtungseinrichtung kann dazu auf der dem Maschinenhaus zugewandten Seite der oberen Plattform angeordnet sein. Eine entsprechende Anordnung wird aus den gleichen Gründen günstigerweise auch für den Wärmetauscher und für andere Bauteile der Entfeuchtungseinrichtung gewählt.

Die Luftzirkulation wird wesentlich durch einen gegen Luftaustausch abgeschlossenen Innenraum befördert. Dazu sind die kritischen Stellen des Turminnenraumes, wie die Turmtür, am meeresbodenseitigen Ende des Turmes oder der Durchführung für den aus dem Maschinenhaus kommenden Kabelstrang in den Turminnenraum abgedichtet. Die Turmtür kann beispielsweise als Schleuse, d.h. als Doppeltüre ausgebildet sein, so dass auch bei einfach geöffneter Tür kein Luftstrom durch die Turmtür erfolgen kann. Der Turminnenraum ist vorzugsweise durch eine innen an der Turminnenwandung angeschweißte oberste Plattform, kurz unterhalb des Maschinenhauses, abgeschlossen. Die für den Kabelstrang notwendige Kabeldurchführung durch die oberste Plattform, kann mittels einer Dichtung abgedichtet sein. Die Dichtung kann beispielsweise eine Bürstendichtung oder einer Labyrinthdichtung sein und einen Luftaustausch aus dem Turminnenraum und dem Maschinenhausinnenraum verringern oder sogar verhindern.

Die oberste Plattform ist vorzugsweise öldicht mit der Turmwandung verschweißt. Damit ist aus im Maschinenhaus angeordneten Geräten bei einem eventuellen Störfall austretendes Öl durch die oberste Plattform auffangbar und gelangt somit nicht in das Meer oder den Boden.

Es ist auch denkbar die Unterseite des Maschinenhauses gegen Luftaustausch abzudichten. Dabei ist das Lager zwischen Turm und Maschinenhaus abgedichtet und die Durchführung des Kabelstranges durch den Maschinenhausboden kann beispielsweise mit Hilfe von Gummimuffen erfolgen.

Da der Durchgang im Maschinenhausboden aufgrund der schwierigen räumlichen Verhältnisse mit dem darüber angeordneten Antriebsstrang üblicherweise relativ groß ist, ist eine Verwendung eines LKW-planenartigen Gewebes als Tuchdichtung mit geeigneter, leicht lösbarer Einfassung besonders vorteilhaft. Ein leicht verschließbares Mannloch sowie eine Kabeldurchführung sind in die Tuchdichtung integriert.

In der bevorzugten Ausführungsform der Erfindung ist der Innenraum des Maschinenhauses nach außen abgedichtet. Dazu kann eine Abdichtung zwischen Turm und Maschinenhaus vorgesehen sein. Die Abdichtung ist vorzugsweise eine kostengünstige Bürstendichtung. Sie kann aber auch eine Labyrinthdichtung sein.

Der Innenraum des Maschinenhauses ist im vorderen Bereich alternativ in zwei bevorzugten Varianten abgedichtet. In einer ersten Variante ist eine Abdichtung zwischen Maschinenhausverkleidung und Spinner vorgesehen. Dabei kann eine Bürstendichtung an der dem Maschinenhaus zugewandten Spinnerkante entlang geführt sein, die den Übergang zwischen Spinner und Maschinenhaus im Sinne der Erfindung abdichtet. Zusätzlich sind dann vorzugsweise ebenfalls Bürstendichtungen zwischen Spinner und jedem der Rotorblattaußenwandungen vorgesehen. In der ersten Variante der Abdichtung ist damit der Innenraum des Spinners, in dem auch die Rotornabe angeordnet ist, in den entfeuchteten Innenraum mit einbezogen. Insbesondere sind dadurch elektronische Bauteile wie der Blattverstellantrieb der Rotorblattnabe vor Korrosion weitestgehend geschützt.

In einer zweiten Variante der Abdichtung wird der Innenraum des Spinners nicht entfeuchtet. Der Lagerbock des vorderen Rotorlagers kann als Teil einer Begrenzung des Innenraumes verwendet werden. Der Freiraum zwischen dem Lagerbock und der Maschinenhausinnenwandung kann durch Trennflächen in Form von Planen oder festen Wandungen geschlossen werden. Die zweite Variante der Abdichtung hat den Vorteil, dass die Abdichtung nicht mit einer zusätzlichen, ständigen, verschleißenden Rotationsbewegungen ausgesetzten Dichtung erfolgt, wie der Übergang zwischen Spinner und Maschinenhaus. Die Dichtung ist dort erheblichem Verschleiß ausgesetzt. In der zweiten Variante wird die ohnehin vorhandene Abdichtung der Lagerung der Rotorwelle im Lagerbock zur Abdichtung des Maschinenhaus gegenüber der Nabe genutzt.

Die nachfolgenden Ausführungen beziehen sich auch auf die zusätzliche Entfeuchtungseinrichtung im Maschinenhaus. Entfeuchtungseinrichtung und zusätzliche Entfeuchtungseinrichtung sind vorzugsweise ähnlich ausgeführt. In einer weiteren, besonders bevorzugten Ausführungsform der Erfindung, weist die Entfeuchtungseinrichtung im Tumrinnenraum eine Erwärmungseinrichtung, beispielsweise in Form eines Wärmetauschers, für die Luft im Innenraum auf. Durch einen Wärmetauscher wird vorzugsweise Abwärme, insbesondere von dem im Maschinenhaus angeordneten Generator abtransportiert und dieser so gekühlt. Die Abwärme wird dann durch den Wärmetauscher zur Erwärmung der Luft im Turminnenraum verwendet. Die erwärmte Trockenluft strömt durch den Trockenluftauslass in den Innenraum und steigt im Turminnenraum der aufgestellten Windenergieanlage auf. Der Wärmetauscher ist vorzugsweise zwischen Entfeuchter, Ventilator oder nach diesen Bauteilen, ebenfalls im maschinenhausseitigen Teil des Turminnenraumes angeordnet und erwärmt dort die Luft, bevor sie durch den Ventilator in den Luftkanal gedrückt wird.

In einer weiteren Ausführungsform der Erfindung ist die Erwärmungseinrichtung als Heizung ausgebildet. Der Heizung wird vorzugsweise ein Teil der in der Windenergieanlage generierten Elektrizität über Kabel zugeführt. Die Heizung kann aber bei Bedarf auch über einen dafür vorgesehenen Netzanschluss versorgt werden und im meeresbodenseitigen Abschnitt des Turminnenraumes angeordnet sein.

Die Entfeuchtungseinrichtung und/oder die zusätzliche Entfeuchtungseinrichtung weisen vorzugsweise eine Adsorptionseinrichtung auf. Durch die Adsorptionseinrichtung ist durch einen Feuchtlufteinlass aus dem Innenraum eingesogene Prozessluft zur Adsorption von Feuchtigkeit hindurch und durch einen Trockenluftauslass wieder in den Innenraum hinein geführt. Durch die Adsorptionseinrichtung ist ein Regenerationsluftstrom von außen durch einen Regenerationslufteingang durch die Adsoprtionseinrichtung hindurch geführt. Dort nimmt die Regenerationsluft Feuchtigkeit aus der Adsorptionseinrichtung auf und führt, als feuchte Regenerationsluft, die Feuchtigkeit durch einen Regenerationsluftausgang nach außen ab. Die Feuchtigkeit wird damit aus dem eingesogenen Prozessluftstrom an die Adsoprtionseinrichtung abgegeben und an anderer Stelle von der Regenerationsluft aufgenommen und nach außen abtransportiert.

Dabei ist eine Heizung im Regenerationsluftkreislauf vorgesehen, die zwischen Regenerationslufteingang und der Adsorptionseinrichtung angeordnet ist. Die Heizung erwärmt die von außen eintretende Regenerationsluft. Die erwärmte Regenerationsluft kann mehr und leichter Feuchtigkeit aufnehmen als kalte Luft. Das Adsorptionsprinzip beruht darauf, dass durch die Erwärmung die relative Feuchte der Regenerationsluft gesenkt wird, und damit die in der Adsorptionseinrichtung angelagerten Wassermoleküle aufnehmbar sind.

Entfeuchter in Form von Adsorptionsentfeuchtern sind bei gleicher Leistung effektiver als beispielsweise Peltier-Elemente. Adsoptionsentfeuchter haben bei einer 7 kW Heizung eine Entfeuchtungsleistung von 5 l/h. Während Peltier-Elemente eine elektrische Leistung von 11 bis 12 kW benötigen.

Günstigerweise ist ein über einen im Innenraum angeordneten Feuchtesensor steuerbarer Schalter für die Entfeuchter vorgesehen. Bei trockener Innenluft bleiben die Entfeuchter ausgeschaltet und bei feuchter Luft werden die Entfeuchter angeschaltet. Die Ein- und Abschaltwerte sind durch eine Hysterese voneinander beabstandet.

Die Aufgabe wird auch durch ein Verfahren zum Trocknen in einem gegen Luftaustausch abgedichteten oder zumindest im Wesentlichen abgedichteten Innenraum einer Windenergieanlage mit den Merkmalen des Anspruchs 8 gelöst.

Dabei wird durch Ansaugen von Luft aus dem Innenraum ein Unterdruckbereich in dem Innenraum und durch Ausstoßen getrockneter Luft in den Innenraum ein Überdruckbereich in dem Innenraum und zwischen den Druckbereichen ein trocknender Luftstrom im Innenraum erzeugt.

In einer bevorzugten Ausführungsform der Erfindung wird die Entfeuchtungseinrichtung am maschinenhausseitigen Ende des Turmes, vorzugsweise im Turminnenraum angeordnet. Die Feuchtlufteinlassöffnung der Entfeuchtungseinrichtung wird direkt an der Entfeuchtungseinrichtung vorgesehen und damit ebenfalls im maschinenhausseitigen Ende des Turmes angeordnet. Der Trockenluftauslass wird vorzugsweise davon beabstandet am bodenseitigen Ende des Turminnenraumes angeordnet. Vorzugsweise wird durch den im Wesentlichen luftdichten Abschluss des Innenraumes ein Unterdruckbereich am maschinenhausseitigen Ende des Turminnenraumes und ein Überdruckbereich am maschinenhausabseitigen Ende des Turminnenraumes erzeugt. Dadurch entsteht ein weitläufiger Luftstrom vom maschinenhausabseitigen Ende zum maschinenhausseitigen Ende des Turminnenraumes. Die erfindungsgemäße Anordnung macht von dem Vorteil gebrauch, dass feuchte Luft grundsätzlich bei gleichen Parametern leichter ist als trockene Luft und damit von selbst im Turminnenraum aufsteigt. Durch die erfindungsgemäße Anordnung der Feuchtlufteinlassöffnung im oberen Bereich des Turminnenraumes kann auf einen zusätzlichen Ventilator verzichtet werden, oder zumindest kann ein Ventilator mit geringerer Leistung verwendet werden, um eine hinreichende Luftzirkulation im Innenraum des Turmes zu erzeugen.

In einer weiteren bevorzugten Ausführungsform des erfindungsgemäßen Verfahrens, wird ein Luftstrom erwärmt. Durch die Erwärmung des Luftstromes wird das erfindungsgemäße Verfahren eissicher und die Entfeuchtung kann auch bei geringen Außentemperaturen vorgenommen werden.

Dazu kann die Entfeuchtungseinrichtung einen Adsorptionsentfeuchter umfassen, der nicht auf dem Prinzip der Kondensation von Feuchtigkeit an kalten Flächen beruht, sondern auf einem physikalischen und/oder chemischen Anlagerungsprinzip von Wasser auf einer Adsorptionseinrichtung. Dazu wird ein aus dem Innenraum eingesogener Luftstrom zur Adsorption von Feuchtigkeit durch die Adsorptionseinrichtung hindurch geführt und aus einem Trockenluftauslass wieder in den Innenraum ausgeblasen. Der Innenraum kann der Turminnenraum, der Innenraum des Maschinenhauses oder eine Kombination von beiden sein. Im Innenraum wird ein Prozessluftstrom ausgebildet. Von diesem getrennt wird ein Regenerationsluftstrom von außen durch einen Regenerationslufteingang zur Adsorptionseinrichtung geführt und zur Aufnahme der in der Adsorptionseinrichtung adsorbierten Feuchtigkeit durch die Adsorptionseinrichtung hindurch geführt. Danach wird die feuchte Regenerationsluft durch einen Regenerationsluftausgang nach außen abgeführt. Die Regenerationsluft wird zwischen dem Regenerationslufteingang und der Adsorptionseinrichtung erwärmt. Die relative Feuchtigkeit der erwärmten Luft wird durch die Erwärmung verringert und kann damit mehr und leichter Feuchtigkeit aus der Adsorptionseinrichtung aufnehmen. Dieses Verfahren ist eissicher, da es im Grunde bei beliebigen Außenlufttemperaturen funktioniert.

Im Stand der Technik bekannte Entfeuchtungseinrichtungen beruhen auf dem physikalischen Prinzip der Kondensation. Dazu werden im Prinzip Flächen gekühlt. Die sich an den Flächen abkondensierende Feuchtigkeit kann dann in einem Trichter aufgenommen und nach außen als Wasser abgeführt werden. Dieses System funktioniert jedoch augenscheinlich nicht bei Temperaturen im Bereich des Gefrierpunktes, da dann das Wasser nicht mehr abführbar ist. Schon bei Feuchtlufttemperaturen von 10°C besteht durch das erforderliche Temperaturgefälle Vereisungsgefahr. Das erfindungsgemäße Entfeuchtungssystem löst dieses Problem vollständig. Herkömmliche Türme können durch die beschriebene Entfeuchtungseinrichtung innerhalb weniger Stunden vollständig entfeuchtet werden. Eine derartige Entfeuchtungsleistung ist bei gleicher elektrischen Leistung mit Peltier-Elementen nicht möglich, und die Entfeuchtung des Innenraumes einer Windenergieanlage würde mehrere Stunden bis Tage dauern. In diesem Zeitraum könnte aber schon die zu vermeidende Korrosion beginnen.

Die Erfindung wird anhand von zwei Ausführungsbeispielen in vier Figuren beschrieben. Dabei zeigen:
- Fig. 1: eine Schnittansicht eines Turmes einer Windenergieanlage mit Entfeuchter,
- Fig. 2: einen Ausschnitt aus Fig. 1 mit einer Bürstendichtung,
- Fig. 3: einen Ausschnitt aus Fig. 1 mit einer Labyrinthdichtung,
- Fig. 4: eine Schnittansicht eines Turmes einer Windenergieanlage mit Wärmetauscher und Entfeuchter, gemäß einer zweiten Ausführungsform,
- Fig. 5: eine Schnittansicht eines Maschinenhauses mit Entfeuchter.

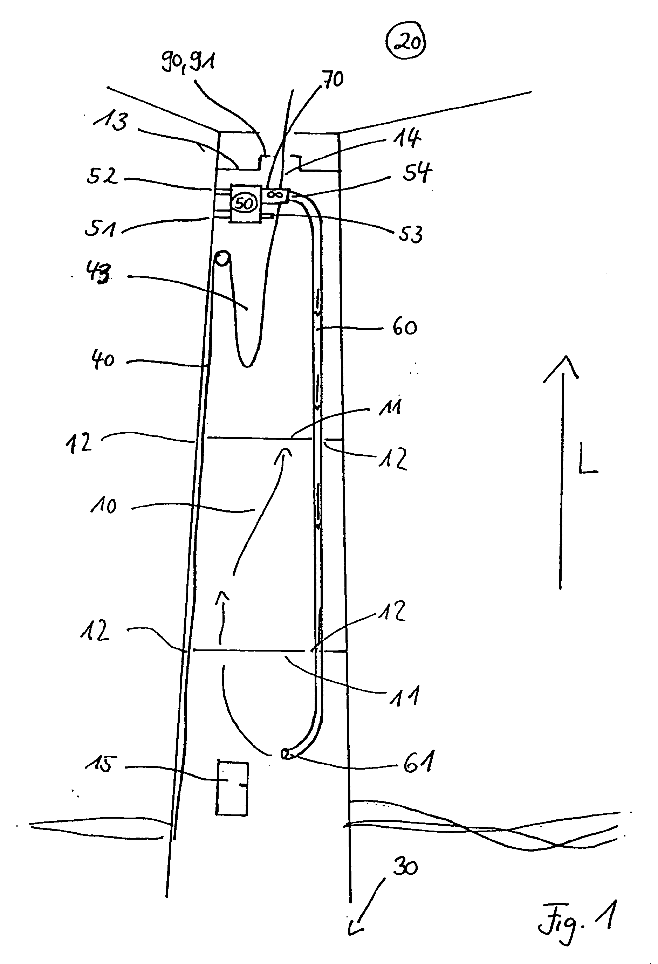

Fig. 1 zeigt einen Teil einer off-shore Windenergieanlage. Fig. 1 stellt einen Turmquerschnitt eines im Wesentlichen röhrenförmigen Turmes 10 einer Windenergieanlage dar. Der in Fig. 1 obere Bereich zeigt einen Teil eines Maschinenhauses 20, das drehbar auf dem maschinenhausseitigen Ende des Turmes 10 angeordnet ist. Das maschinenhausabseitige Ende des Turmes 10 ist mittels eines Fundamentes 30 in einem (nicht eingezeichneten) Meeresboden verankert. In den Turminnenraum sind senkrecht zu einer Turmlängsrichtung L, Plattformen 11 eingezogen. Die Plattformen 11 weisen Durchbrüche 12 auf, die u. a. eine Luftzirkulation im Turminnenraum ermöglichen. In Längsrichtung L fluchtend hintereinander angeordnete, zentral in den Plattformen 11 eingebrachte Durchbrüche 12 sind aber auch zur Durchführung eines Kabelstranges 40 aus dem Maschinenhaus 20 heraus, in Längsrichtung L durch den Innenraum des Turmes 10 hindurch und aus dem maschinenhausabseitigen Abschnitt des Turmes 10 im Bereich des Fundamentes 30 heraus, vorgesehen. Darüber hinaus sind in Längsrichtung L fluchtend hintereinander angeordnete Durchbrüche 12 auch zur Durchführung eines Luftkanals 60 vom maschinenhausseitigen zum maschinenhausabseitigen Ende des Turmes in die Plattformen 11 eingelassen.

Die in Fig. 1 oberste Plattform 13 schließt den Turminnenraum zum Maschinenhaus 20 hin ab. Sie weist eine Durchführung 14 für den Kabelstrang 40 sowie ein (nicht eingezeichnetes) Mannloch für aufsteigendes Wartungspersonal und eine (nicht eingezeichnete) Lastenluke zum Durchheben von für das Wartungspersonal bestimmtem Wartungsgerät auf. Insbesondere das Mannloch und die Lastenluke sind luftdicht verschließbar. Die oberste Plattform 13 ist an der Innenwandung des Turmes 10 angeschweißt und gegen Luftaustausch zwischen Turminnenraum und Maschinenhaus 20 abgedichtet oder zumindest im Wesentlichen mittels einer Abdichtung 90, 100 abgedichtet, so dass zumindest kein starker Luftstrom durch die Durchführung 14 hindurch auftritt.

In Abhängigkeit von der Gründungsart ist eine Dichtung des meeresbodenseitigen Endes des Turmes zum Fundament vorgesehen. Das ist insbesondere bei einer Gründung durch Gittermasten oder Monopiles der Fall.

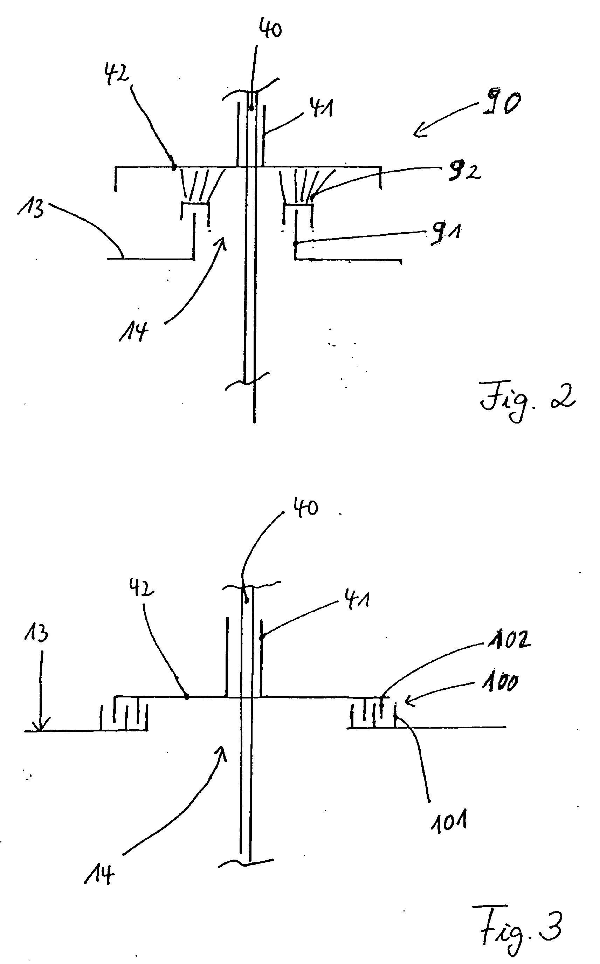

Zwei Ausführungsformen einer Abdichtung 90, 100 sind in Fig. 2 und Fig. 3 dargestellt.

Meeresbodenseitig der obersten Plattform 13 ist ein im Innenraum des Turmes 10 angeordneter Entfeuchter 50 vorgesehen. Der Entfeuchter 50 in Fig. 1 ist ein Adsoptionsentfeuchter 50. Es ist aber auch die Verwendung anderer Entfeuchtertypen, bspw. die Verwendung von Kodensationsentfeuchtern denkbar. Der Adsorbtionsentfeuchter 50 weist einen durch die Turmwandung am maschinenhausseitigen Ende des Turmes 10 geführten Eingang 51 und einen Ausgang 52 für durch den Adsorptionsentfeuchter 50 leitbare Regenerationsluft auf. Der Eingang 51 kann ggf. mit einem (nicht dargestellten) Filter versehen sein. Die Turmwandung ist im maschinenhausseitigen Abschnitt nur geringen Biegemomenten ausgesetzt, so dass die Öffnungen 51, 52 in der Turmwandung deren Stabilität nur unwesentlich verringern. Die Öffnungen weisen einen Durchmesser von etwa 125mm auf. Ein direkt am Gehäuse des Adsorptionsentfeuchters 50 angeordneter Feuchtlufteingang 53 und ein Trockenluftausgang 54 sind für die Durchleitung der Prozessluft aus dem Turminnenraum durch den Adsorptionsentfeuchter 50 hindurch bestimmt. Der Regenerationsluftstrom und der Prozessluftstrom sind im Adsorptionsentfeuchter 50 im Wesentlichen voneinander getrennt. Die in den Adsorptionsentfeuchter 50 eingesogene Feuchtluft gibt ihre Feuchtigkeit an ein auf einen Sorptionsrotor aufgetragenes Sorptionsmittel ab und verlässt den Absorptionsentfeuchter 50 als Trockenluft durch den Trockenluftausgang 54. Sorption, Absorption und Adsorption werden synonym verwendet, da im Rahmen der Anmeldung die detaillierte Funktionsweise des Entfeuchters unwesentlich ist. An den Adsorptionsentfeuchter 50 schließt sich in Stromrichtung der Trockenluft ein Luftkanal 60 an, der die Trockenluft vom Entfeuchter 50 kommend zunächst parallel zur obersten Plattform 13 leitet, und der Luftkanal 60 knickt kurz vor der Turminnenwandung zum Meeresboden hin ab und verläuft mit seinem längsten Abschnitt parallel zur Turmlängsrichtung L bis zum meeresbodenseitigen Ende des Turminnenraumes. Am meeresbodenseitigen Ende des Turminnenraumes knickt der Luftkanal 60 nochmals im Wesentlichen parallel zur Meeresbodenoberfläche hin ab und weist an seinem Ende einen Trockenluftauslass 61 auf.

In dem Luftkanal 60 ist neben dem Entfeuchter 50 ein Ventilator 70 angeordnet, der die zu trocknende Luft durch den Adsorptionsentfeuchter 50 saugt und durch den Luftkanal 60 hindurch drückt. Am Trockenluftauslass 61 bildet sich ein Überdruckbereich durch die dort austretende Trockenluft aus. Am Feuchtlufteingang 53 des Entfeuchters 50 entsteht durch die vom Ventilator 70 abgesogene Luft ein Unterdruckbereich. Durch das sich zwischen dem Unterdruckbereich und dem Überdruckbereich ausbildende Druckgefälle wird im Turminnenraum ein Luftstrom von Trockenluft von dem meeresbodenseitigen Ende des Turminnenraumes zum maschinenhausseitigen Ende des Turminnenraumes erzeugt. Die Luft strömt im Wesentlichen entlang des gesamten Turmquerschnitts in Längsrichtung L des Turmes 10, durch die dafür vorgesehenen Durchlassöffnungen 12 in den eingeschweißten Plattformen 11.

Ein Luftstrom wird zum einen durch das Druckgefälle erzeugt, zum anderen aber auch durch die Tatsache, dass feuchte Luft grundsätzlich etwas leichter als trockene Luft, bei ansonsten gleichen äußeren Rahmenbedingungen, ist. Damit erhält die feuchte Luft einen Auftrieb und steigt im Turminnenraum zusätzlich beschleunigt auf. Der Auftrieb und die Druckdifferenz wirken hier verstärkend zusammen.

Die Entfeuchtungswirkung des Entfeuchters hängt kritisch von der Abdichtung des Turminnenraumes ab. Dichtungsstellen sind mit Dichtungen versehen. Dazu ist die im meeresbodenseitigen Abschnitt der Turmwand zum Einstieg von Servicepersonal in den Turminnenraum bestimmte Tür 15, als Doppeltür mit Schleusenfunktion ausgebildet. Die Durchführung 14 des Kabelstranges 40 ist mit einer Bürstendichtung 90 abgedichtet. Der Rand der Durchführung 14 der obersten Plattform 13 weist einen, die Durchführung 14 umlaufenden, senkrecht in Richtung Maschinenhaus 20 abstehenden Streifen 91 gleich bleibender Breite und Höhe entlang des Umfangs auf, an dessen maschinenhausseitigem Ende Bürsten 92 befestigt sind. Um den Kabelstrang 40 ist eine Manschette 41 gelegt, die einen, im Wesentlichen parallel zur obersten Plattform 13 angeordneten Tellerring 42 aufweist, der im montierten Zustand gegen die Bürsten 92 stößt und somit die eigentliche Bürstendichtung 90 ausbildet. Die Bürstendichtung 90 verhindert zwar den Luftaustausch nicht vollständig, jedoch schließt sie im vorliegenden Sinne den Turminnenraum im Wesentlichen gegen Luftaustausch abgedichtet ab.

Fig.3 zeigt eine zweite Ausführungsform einer Dichtung 90, 100. Die in Fig. 3 dargestellte Labyrinthdichtung 100 weist auf der maschinenhausseitigen Seite der obersten Plattform 13 am Rand der Durchführung 14 drei senkrecht zum Maschinenhaus 20 abstehende, die Durchführung kreisförmig umlaufende Streifen 101 auf. In deren Zwischenräume greifen, von einem über eine Manschette 41 mit dem Kabelstrang 40 fest verbundenen Tellerring 42, in Richtung Meeresboden abstehende Streifen 102 ein. Das sich durch die umlaufenden Streifen 101, 102 ausbildende Labyrinth dichtet im vorliegenden Sinne auch im Wesentlichen gegen einen Luftaustausch ab. In einer weiteren, hier nicht dargestellten Ausführungsform der Labyrinthdichtung 100, können die Zwischenräume zwischen den Streifen 101 soweit mit Wasser gefüllt werden, dass die vom Tellerring 42 abstehenden, in die Zwischenräume eingreifenden Streifen 102 noch in das Wasser eintauchen und einen Luftaustausch durch die Labyrinthdichtung 100 vollständig verhindern.

Der aus dem Maschinenhaus 20 durch den Durchlass 14 geführte Kabelstrang 40, ist in einer Kabelloop 42 im maschinenhausseitigen Abschnitt des Turminnenraumes geführt. Die Kabelloop 42 gestattet die Verdrillung des Kabelstranges bei einer Rotation des Maschinenhauses 20 um bis zu drei Umdrehungen auf dem Turm 10.

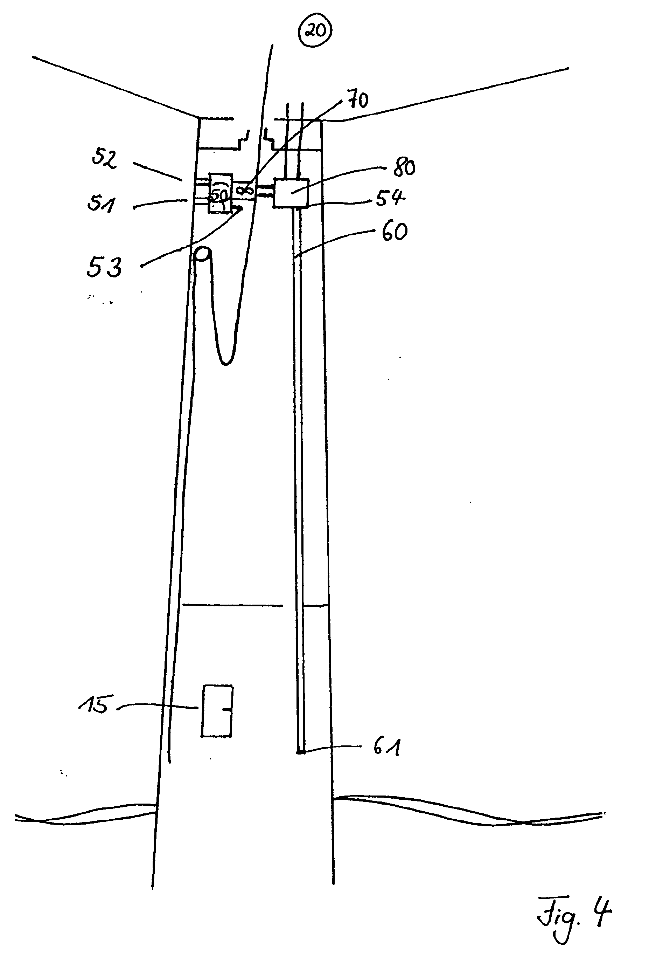

In einer weiteren Ausführungsform der Erfindung, gemäß Fig. 4, ist der Ventilator 70 in Stromrichtung des im Turminnenraum zirkulierenden Luftstromes nach dem Adsorptionsentfeuchter 50 vorgesehen. Die im Adsorptionsentfeuchter 50 getrocknete Prozessluft wird durch den Luftkanal 60 zum meeresbodenseitigen Ende des Turminnenaumes geführt. Der Luftkanal 60 ist über seine gesamte Länge parallel zur Turmlängsrichtung L ausgebildet und weist an seinem meeresbodenseitigen Ende den Trockenluftauslass 61 auf. Der Eingang 51 und der Ausgang 52 für die Regenerationsluft sind, wie in der Ausführungsform gemäß Fig. 1, im maschinenhausseitigen Abschnitt der Turmwandung eingelassen.

Als Erweiterung gegenüber der ersten Ausführungsform der Erfindung gemäß Fig. 1 weist die zweite Ausführungsform der Erfindung gemäß Fig. 4 zusätzlich einen Wärmetauscher 80 auf. Nachdem die Luft von dem Ventilator 70 durch den Feuchtlufteinlass 53 aus dem Innenraum angesogen und durch den Adsorptionsentfeuchter 50 gedrückt wurde, wird sie mittels eines in Stromrichtung nach dem Entfeuchter 50 angeordneten Wärmetauscher 80 erwärmt. Der Wärmetauscher 80 weist einen Wärmemittelkreislauf auf, über den Abwärme von im Maschinenhaus 20 angeordneten Bauteilen aufgenommen wird und an die Prozessluft im Turminnenraum abgegeben wird. Die feuchte Prozessluft strömt durch den Feuchtlufteingang 53 und den Ventilator 70 in den Adsorptionsentfeuchter 50 hinein, durch den Entfeuchter 50 und den Wärmetauscher 80 - in dieser Reihenfolge - hindurch, aus dem Trockenluftausgang 54 in den Luftkanal 60 hinein, durch ihn hindurch und aus dem Trockenluftauslass 61 am meeresbodenseitigen Ende des Turmes 10 in den Turminnenraum hinein. Der Ventilator 70, der Entfeuchter 50 und der Wärmetauscher 80 sind luftdicht miteinander verbunden, so dass der in Stromrichtung nach dem Ventilator 70 entstehende Überdruck über den Adsorptionsentfeuchter 50 und den Wärmetauscher 80 an den Trockenluftauslass 61 weiter gegeben wird. Somit entsteht auch in der zweiten Ausführungsform der Erfindung gemäß Fig. 4 ein Unterdruck am Feuchtlufteingang 53 und ein Überdruck am Trockenluftauslass 61 des Luftkanals 60. Die erwärmte Luft nimmt besonders viel Feuchtigkeit auf und ihre Wärme wirkt darüber hinaus einer Versprödung der Turmwandung bei sehr geringen Außentemperaturen entgegen. Das Druckgefälle zwischen Feuchtlufteingang 53 und Trockenluftauslass 61 erzeugt auch hier einen Trockenluftstrom im Turminnenraum, der zusätzlich dadurch unterstützt wird, dass die aus dem Trockenluftauslass 61 austretende Luft erwärmt ist und dadurch einen zusätzlichen Auftrieb erfährt.

Der Ventilator 70, der Entfeuchter 50 und der Wärmetauscher 80 sind auf der maschinenhausseitigen Seite der oberen Plattform 13 montiert. Durch die Anordnung oberhalb der oberen Plattform 13 sind die genannten Bauteile für die Wartung leicht zugänglich.

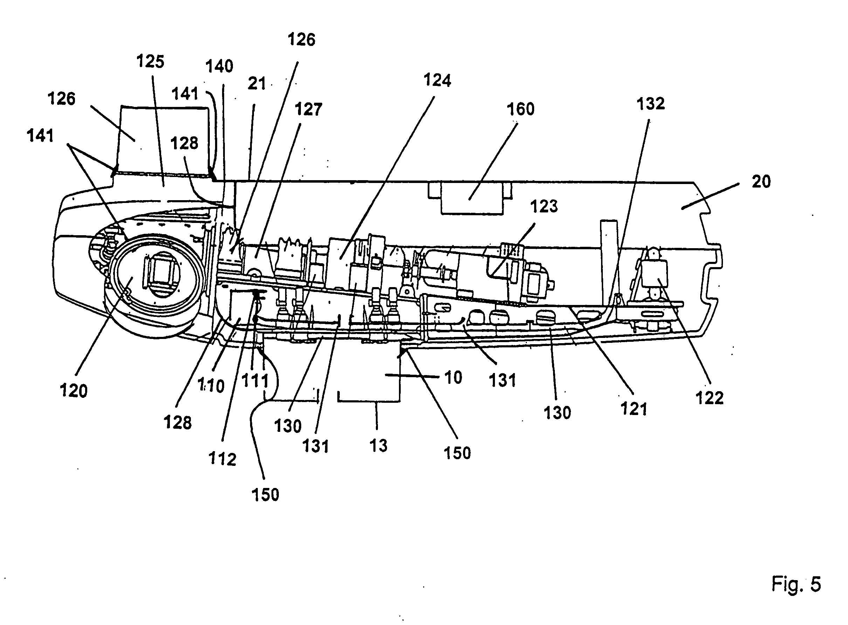

Fig. 5 zeigt den Schnitt durch das drehbar auf dem Turm 10 angeordnete Maschinenhaus 20. In dieser Ausführungsform der Erfindung ist der Innenraum des Maschinenhauses 20 nach außen abgedichtet. In dem Maschinenhaus ist ein zusätzlicher Entfeuchter 110 in dem unteren, bodennahen Bereich des Innenraum des Maschinenhaus 20 vorgesehen. Der zusätzliche Adsorptionsentfeuchter 110 ist im vorderen, der Rotornabe 120 benachbarten Bereich des Maschinenhauses 20 angeordnet.

Der Regenerationslufteingang und der Regenerationsluftausgang des zusätzlichen Adsorptionsentfeuchters sind in die Maschinenhauswandung eingelassen. Sie sind mit etwa 100mm Durchmesser etwas kleiner als die Regenerationsluftöffnungen des Adsorptionsentfeuchters in der Turmwandung.

Von einem Trockenluftausgang 111 des zusätzlichen Adsorptionsentfeuchters 110 geht eine Luftleitung 130 ab. Ein Feuchtlufteingang 112 am zusätzlichen Adsorptionsentfeuchter 110 saugt Feuchtluft des Innenraumes des Maschinenhauses 20 ein. Die Luftleitung 130 ist unterhalb eines Maschinenträgers 121 zum rückwärtigen Teil des Maschinenhauses 20 führend angeordnet, und sie weist dort einen Trockenluftauslass 132 im Bereich zwischen einem Generator 123 und einem Trafo 122 auf. Die Luftleitung 130 ist als Rohr mit einem Durchmesser von 160 mm ausgebildet und weist optional entlang ihrer Länge weitere, voneinander beabstandete Luftauslässe 131 für Trockenluft auf. Die Luftauslässe 131 sind insbesondere unterhalb des Generators 123 und unterhalb eines ihm vorgeordneten Getriebes 124 vorgesehen.

Insbesondere aufgrund der Beabstandung von Trockenluftauslass 132 im hinteren Bereich des Maschinenhauses 20 und Feuchtlufteingag 112 unmittelbar am zusätzlichen Adsorptionsentfeuchter 110 entsteht eine Luftzirkulation durch im Wesentlichen das gesamte Maschinenhaus 20 hindurch.

Damit die Trockenluft im Innenraum des Maschinenhauses 20 länger trocken bleibt, ist zumindest der Bereich des Innenraumes, in dem der Generator 123, das Getriebe 124 und der Trafo 122 angeordnet sind, gegen Luftaustausch nach außen abgedichtet. Zur Abdichtung des Innenraumes am der Rotornabe 120 zugewandten Ende sind zwei voneinander unabhängige Varianten der vorderen Abdichtung 128, 140 in Fig. 5 eingezeichnet.

In der ersten Variante der vorderen Abdichtung 128, 140 ist der Innenraum des Maschinenhauses 20 zunächst durch eine Bürstendichtung 140 zwischen Maschinenhausverkleidung 21 und Spinner 125 abgedichtet. Zusätzlich ist eine Bürstendichtung 141 am Übergang zwischen Spinner 125 und jedem der drei Rotorblätter 126 vorgesehen. In der ersten Variante der Abdichtung ist der Innenraum des Spinners 125, in dem auch die Rotornabe 120 angeordnet ist, mit in den getrockneten Innenraum des Maschinenhauses 20 einbezogen. Die Bürstendichtung 140 ist durch die ständige Rotorrotation während des Betriebs allerdings Abnutzungen unterworfen.

In einer zweiten Variante der vorderen Abdichtung 128, 140, werden der Innenraum des Spinners 125 und also auch die Rotornabe 120 nicht entfeuchtet. In dieser Variante ist der getrocknete Innenraum des Maschinenhauses 20 schon im Bereich eines Lagerbocks 126 zur Rotornabe 120 hin abgedichtet. Zwischen der Maschinenhauswandung im Bereich des Lagerbocks 126 und dem Lagerbock 126 selber sind Zwischenflächen 128 in Form von Planen oder festen Wandungen eingezogen. Der Lagerbock 126 trägt eine Rotorwelle 127 drehbar. In der zweiten Variante der vorderen Abdichtung 128, 140 ist damit keine zusätzliche Abdichtung vorhanden, die mechanischen Belastungen, wie in der ersten Variante, unterworfen wäre. Stattdessen wird die ohnehin vorhandene Dichtung des vorderen Rotorlagers genutzt. Diese Grundidee kann auch für die erste Variante des im Innenraum miteinbezogenen Nabeninnenraums genutzt werden. Die Abdichtung zu den Rotorblättern kann hierbei durch die Blattlager erfolgen. In diesem Fall wird bevorzugt auch nur die Rotornabe 120 entfeuchtet und nicht der gesamte Spinner 125.

Unabhängig von der Ausgestaltung der vorderen Abdichtung 128, 140 ist eine Abdichtung, vorzugsweise auch in Form einer Bürstendichtung 150, am Übergang zwischen Maschinenhaus 20 und Turm 10 vorgesehen. Alternativ kann die Abdichtung eine Labyrinthdichtung sein.

Die in Fig. 1 beschriebene Abdichtung zwischen Kabelstrang 40 und oberster Plattform 13 ist in dieser Ausführungsform der Erfindung nicht unbedingt notwendig, da ein entfeuchteter, insbesondere den Turminnenraum und den Maschinenhausinnenraum umfassender Gesamtinnenraum, entsteht.

Der Generator 123 und das Getriebe 124 weisen jeweils eine Kühleinrichtung auf. Die Kühleinrichtungen sind als Wärmetauscher ausgebildet und umfassen jeweils einen Lufteingang und einen Luftausgang. Der Lufteingang dient zum Einsaugen kühlerer Außenluft, die Wärme des Getriebes 124 bzw. des Generators 123 aufnimmt und diese als warme Abluft durch den Luftausgang nach außen hin abgibt. Die beiden beschriebenen Frischluftkühlkreisläufe der Kühleinrichtungen sind vollständig von der Luft des Maschinenhausinnenraumes getrennt.

Darüber hinaus in Generator 123 und Getriebe 124 entstehende Abwärme wird in den Innenraum des Maschinenhauses 20 abgegeben. Aufgrund der beschriebenen Abdichtungen 140, 150 findet deutlich weniger Luftaustausch mit der Außenluft statt. Es entsteht somit gegenüber dem Stand der Technik ein Kühlproblem. Damit es nicht zu einer unerwünscht hohen Erhitzung der Luft des Innenraumes des Maschinenhauses 20 kommt, wird die Abwärme durch einen Gondelkühler 160 aus dem Maschinenhaus 20 nach außen abgeführt. Der Gondelkühler 160 ist hier als Luftplattenwärmetauscher ausgebildet. Der Gondelkühler 160 weist ebenfalls einen Frischlufteingang und einen Warmluftausgang in das Maschinenhaus 20 auf bzw. kann alternativ außerhalb des Gondelinnenraums montiert werden und weist dann eine Warmluftableitung und eine Kaltlufteinleitung für die Gondel auf.

Der Adsorptionsentfeuchter 50 und der zusätzliche Adsoptionsentfeuchter 110 sind im Wesentlichen baugleich, können sich hinsichtlich Ihrer Leistung jedoch unterscheiden.

### Bezugszeichenliste:

- 10.: Turm
- 11.: Plattformen
- 12.: Durchbrüche
- 13.: oberste Plattform
- 14.: Durchführung
- 15.: Turmtür
- 20.: Maschinenhaus
- 30.: Fundament
- 40.: Kabelstrang
- 41.: Manschette
- 42.: Tellerring
- 43.: Kabelloop
- 50.: Entfeuchter
- 51.: Regenerationslufteingang Entfeuchter
- 52.: Regenerationsluftausgang Entfeuchter
- 53.: Feuchtlufteingang
- 54.: Trockenluftausgang
- 60.: Luftkanal
- 61.: Trockenluftauslass
- 70.: Ventilator
- 80.: Wärmetauscher
- 90.: Bürstendichtung
- 91.: Streifen
- 92.: Bürsten
- 100.: Labyrinthdichtung
- 101.: Streifen
- 102.: Streifen
- 110.: Adsorptionsentfeuchter
- 111.: Trockenluftausgang
- 112.: Feuchtlufteingang
- 120.: Rotornarbe
- 121.: Maschinenträger
- 122.: Trafo
- 123.: Generator
- 124.: Getriebe
- 125.: Spinner
- 126.: Rotorblätter
- 127.: Rotorwelle
- 128.: Abdichtung
- 129.: ---
- 130.: Luftleitung
- 131.: Luftauslässe
- 132.: Trockenluftauslass
- 140.: Abdichtung
- 141.: Bürstendichtung
- 150.: Abdichtung
- 160.: Gondelkühler

## Patentansprüche

1. Windenergieanlage mit einem Turm (10) und einem an einem maschinenhausseitigen Ende des Turmes (10) angeordneten Maschinenhaus (20) mit einem gegen Luftaustausch abgedichteten oder zumindest im Wesentlichen abgedichteten Innenraum und mit einer über einen Feuchtlufteingang (53) und einen Trockenluftauslass (61) mit dem Innenraum in Verbindung stehenden, zwischen ihnen angeordneten Entfeuchtungseinrichtung (50, 60, 70), wobei am Feuchtlufteinlass (53) durch Ansaugen von Luft aus dem Innenraum ein Unterdruckbereich in dem Innenraum erzeugbar ist und am Trockenluftauslass (61) durch Ausstoßen getrockneter Luft ein Überdruckbereich in dem Innenraum erzeugbar ist, **dadurch gekennzeichnet, dass** sich zwischen dem Unterdruckbereich und dem Überdruckbereich ein trocknender Luftstrom im Innenraum ausbildet und die Entfeuchtungseinrichtung (50, 60, 70) einen den Feuchtlufteingang (53) und den Trockenluftauslass (61) voneinander wenigstens mitbeabstandenen Luftkanal (60) aufweist.

2. Wndenergieanlage nach Anspruch 1,
**dadurch gekennzeichnet, dass** die Entfeuchtungseinrichtung (50, 60, 70) der Luft aus dem Innenraum Feuchtigkeit entzieht, ohne während der Entfeuchtung Wasser im flüssigen Aggregatzustand auszubilden.

3. Windenergieanlage nach Anspruch 1 oder 2,
**dadurch gekennzeichnet, dass** die Entfeuchtungseinrichtung (50, 60, 70) eine Heizeinrichtung aufweist.

4. Windenergieanlage nach Anspruch 2,
**dadurch gekennzeichnet, dass** die Entfeuchtungseinrichtung (50, 60, 70) eine Adsorptionseinrichtung aufweist, durch die ein aus dem Innenraum eingesogener Luftstrom zur Adsorption von Feuchtigkeit hindurch geführt ist und ein Regenerationsluftstrom von außen durch einen Regenerationslufteingang (51) zur Adsorptionseinrichtung geführt ist und zur Aufnahme der in der Adsorptionseinrichtung adsorbierten Feuchtigkeit durch die Adsorptionseinrichtung hindurch geführt ist und die feuchte Regenerationsluft durch einen Regenerationsluftausgang (52) nach außen geführt ist und die Heizung im Regenerationsluftkreislauf zwischen dem Regenerationslufteingang (51) und der Adsorptionseinrichtung vorgesehen ist.

5. Windenergieanlage nach Anspruch 1,
**gekennzeichnet durch** einen Turm (10) mit einem drehbar an einem Ende des Turmes (10) angeordneten Maschinenhaus (20) und **dadurch**, dass die Entfeuchtungseinrichtung (50, 60, 70) am maschinenhausseitigen Ende des Turmes (10) angeordnet ist.

6. Windenergieanlage nach Anspruch 1,
**dadurch gekennzeichnet, dass** der Innenraum einen Innenraum des Maschinenhauses (20) umfasst.

7. Windenergieantage nach wenigstens einem der vorstehenden Ansprüche,
**dadurch gekennzeichnet, dass** der Turm (10) einen Turminnenraum aufweist und der abgedichtete oder zumindest im Wesentlichen abgedichtete Innenraum Teil des Turminnenraumes ist und ein Kabelstrang (40) aus dem Maschinenhaus (20) durch eine den Turminnenraum zum Maschinenhaus abdichtende Durchführung (14) geführt ist.

8. Verfahren zum Trocknen in einem gegen Luftaustausch abgedichteten, oder zumindest im Wesentlichen abgedichteten, Innenraum einer Windenergieanlage nach einem der Ansprüche 1 bis 7, mit einer über einen Feuchtlufteingang (53) und einen Trockenluftauslass (61) mit dem Innenraum in Verbindung stehenden, zwischen ihnen angeordneten Entfeuchtungseinrichtung (50, 60, 70), indem:
durch Ansaugen von Luft aus dem Innenraum durch den Feuchtlufteinlass (53) ein Unterdruckbereich in dem Innenraum erzeugt wird und
durch Ausstoßen getrockneter Luft durch den Trockenluftauslass (61) in den Innenraum ein Überdruckbereich in dem Innenraum erzeugt wird und
zwischen dem Unterdruckbereich und dem Überdruckbereich ein trocknender Luftstrom im Innenraum erzeugt wird und der Feuchtlufteingang (53) und der Trockenluftauslass (61) voneinander durch einen Luftkanal (60) wenigstens mitbeabstandet werden.

9. Verfahren nach Anspruch 8,
**dadurch gekennzeichnet, dass** der Unterdruckbereich am maschinenhausseitigen Ende des Innenraumes eines Turms (10) erzeugt wird und der Überdruckbereich am maschinenhausabseitigen Ende des Innenraumes des Turmes (10) erzeugt wird und damit ein Luftstrom vom maschinenhausabseitigen Ende zum maschinenhausseitigen Ende des Innenraumes entsteht.

10. Verfahren nach Anspruch 8 oder 9,
**dadurch gekennzeichnet, dass** ein durch den Feuchtlufteinlass (53) aus dem Innenraum eingesogener Luftstrom zur Adsorption von Feuchtigkeit durch eine Adsorptionseinrichtung hindurch geführt wird und ein Regenerationsluftstrom von außen durch einen Regenerationslufteingang (51) zur Adsorptionseinrichtung geführt wird und zur Aufnahme der in der Adsorptionseinrichtung adsorbierten Feuchtigkeit durch die Adsorptionseinrichtung hindurch geführt wird und die feuchte Regenerationsluft durch einen Regenerationsluftausgang (52) nach außen geführt wird und die Regenerationsluft zwischen dem Regenerationslufteingang (51) und der Adsorptionseinrichtung erwärmt wird.

## Claims

1. A wind energy plant with a tower (10) and a machine housing (20) arranged on an end of the tower (10) towards the machine housing, with an inner space sealed off or at least substantially sealed off from the exchange of air and with a dehumidifying device (50, 60, 70) connected to the inner space by way of a moist air inlet (53) and a dry air outlet (61) and arranged between them, wherein a region of under-pressure is capable of being produced in the inner space by drawing air out of the inner space at the moist air inlet (53) and a region of over-pressure is capable of being produced in the inner space by expelling dried air at the dry air outlet (61), **characterized in that** a drying air flow is formed in the inner space between the under-pressure region and the over-pressure region, and the dehumidifying device (50, 60, 70) has an air duct (60) keeping the moist air inlet (53) and the dry air outlet (61) at least at a distance from each other.

2. A wind energy plant according to Claim 1, **characterized in that** the dehumidifying device (50, 60, 70) of the air draws moisture out of the inner space, without forming water in the liquid state of the plant during the dehumidification.

3. A wind energy plant according to Claim 1 or 2, **characterized in that** the dehumidifying device (50, 60, 70) has a heating device.

4. A wind energy plant according to Claim 2, **characterized in that** the dehumidifying device (50, 60, 70) has an adsorption device through which an air flow drawn in out of the inner space is conveyed for the adsorption of moisture and a regeneration air flow is conveyed from outside through a regeneration air inlet (51) to the adsorption device and is conveyed through the adsorption device in order to absorb the moisture adsorbed in the adsorption device and the moist regeneration air is conveyed to the outside through a regeneration air outlet (52) and the heating in the regeneration air circuit is provided between the regeneration air inlet (51) and the adsorption device.

5. A wind energy plant according to Claim 1, **characterized by** a tower (10) with a machine housing (20) arranged in a rotatable manner at one end of the tower (10), and in that the dehumidifying device (50, 60, 70) is arranged on the end of the tower (10) towards the machine housing.

6. A wind energy plant according to Claim 1, **characterized in that** the inner space embraces an inner space of the machine housing (20).

7. A wind energy plant according to at least one of the preceding Claims, **characterized in that** the tower (10) has an inner space and the sealed off or at least substantially sealed off inner space is part of the inner space of the tower and a cable hardness (40) is conveyed out of the machine housing (20) through a passage (14) sealing the inner space of the tower off from the machine housing.

8. A method of drying in an inner space - sealed off or at least substantially sealed off from air exchange - of a wind energy plant according to one of the Claims 1 to 7, with a dehumidifying device (50, 60, 70) connected to the inner space by way of a moist air inlet (53) and a dry air outlet (61) and arranged between them, in that
by drawing air out of the inner space through the moist air inlet (53) a region of under-pressure is produced in the inner space, and
by expelling dried air through the dry air outlet (61) into the inner space a region of over-pressure is produced in the inner space, and
between the under-pressure region and the over-pressure region a drying air flow is produced in the inner space, and the moist air inlet (53) and the dry air outlet (61) are kept at least at a distance from each other by an air duct (60).

9. A method according to Claim 8, **characterized in that** the region of under-pressure is produced at the end of the inner space of a tower (10) towards the machine housing and the region of over-pressure is produced at the end of the inner space of a tower (10) remote from the machine housing and in this way an air flow is formed from the end of the inner space remote from the machine housing to the end towards the machine housing.

10. A method according to Claim 8 or 9, **characterized in that** an air flow drawn out of the inner space through the moist air inlet (53) is conveyed through an adsorption device for the adsorption of moisture and a regeneration air flow is conveyed from outside through a regeneration air inlet (51) to the adsorption device and is conveyed through the adsorption device in order to absorb the moisture adsorbed in the adsorption device and the moist regeneration air is conveyed to the outside through a regeneration air outlet (52) and the regeneration air is heated between the regeneration air inlet (51) and the adsorption device.

## Revendications

1. Installation d'énergie éolienne qui comprend une tour (10) et un hall de machines (20) situé à une extrémité côté hall de machines de la tour, avec un volume interne à l'abri d'un échange d'air ou au moins essentiellement étanche, avec, entre une entrée d'air humide (53) et une sortie d'air sec (61) par lesquelles il est relié au volume interne, un dispositif de déshumidification (50, 60, 70) qui permet d'obtenir dans le volume interne, vers l'entrée d'air humide (53) une zone de dépression par aspiration d'air et vers la sortie d'air sec (61) une zone de surpression par éjection d'air, cette installation étant **caractérisée en ce qu'**entre les zones de dépression et de surpression est formé dans le volume interne un courant d'air à effet de séchage et que le dispositif de déshumidification (50, 60, 70) présente un canal d'air (60) ayant au moins pour effet d'espacer l'une de l'autre l'entrée d'air humide (53) et la sortie d'air sec (61).

2. Installation d'énergie éolienne selon la revendication 1, **caractérisée en ce que** le dispositif de déshumidification (50, 60, 70) retire de l'humidité de l'air provenant du volume interne sans former un agrégat liquide pendant cette déshumidification.

3. Installation d'énergie éolienne selon la revendication 1 ou 2, **caractérisée en ce que** le dispositif de déshumidification (50, 60, 70) présente un dispositif chauffant.

4. Installation d'énergie éolienne selon la revendication 2, **caractérisée en ce que** le dispositif de déshumidification (50, 60, 70) présente un dispositif d'absorption à travers lequel passent, d'une part pour l'absorption d'humidité, un courant d'air extrait du volume interne, d'autre part pour recueillir l'humidité ainsi absorbée, un courant d'air de régénération provenant de l'extérieur à travers une entrée d'air de régénération (51) conduisant à ce dispositif d'absorption, l'air de régénération humide étant évacué à l'extérieur à travers une sortie d'air de régénération (52) et le dispositif chauffant étant prévu dans le circuit d'air de régénération entre l'entrée (51) de cet air et le dispositif d'absorption.

5. Installation d'énergie éolienne selon la revendication 1, **caractérisée par** une tour (10) présentant à une extrémité, un hall de machines (20) rotatif, le dispositif de déshumidification (50, 60, 70) étant disposé à l'extrémité côté hall de machines de la tour.

6. Installation d'énergie éolienne selon la revendication 1, **caractérisée en ce que** le volume interne comprend un volume interne du hall de machines.

7. Installation d'énergie éolienne selon au moins une des revendications précédentes, **caractérisée en ce que** la tour (10) présente un volume interne de tour dont une partie est constituée par le volume interne à l'abri d'un échange d'air et au moins essentiellement étanche, et qu'un câblage (40) partant du hall de machines (20) traverse un passage (14) assurant l'étanchéité entre le volume interne de la tour et le hall de machines.

8. Procédé de séchage dans un volume interne à l'abri d'un échange d'air ou au moins essentiellement étanche, d'une installation d'énergie éolienne selon une des revendications 1 à 7, comprenant entre une entrée d'air humide (53) et une sortie d'air sec (61) par lesquelles il est relié au volume interne, un dispositif de déshumidification (50, 60, 70), procédé selon lequel sont créés dans le volume interne, vers l'entrée d'air humide (53) une zone de dépression par aspiration d'air et vers la sortie d'air sec (61) une zone de surpression par éjection d'air, avec entre les zones de dépression et de surpression formation dans le volume interne d'un courant d'air à effet de séchage, l'entrée d'air humide (53) et la sortie d'air sec (61) étant au moins espacées l'une de l'autre par un canal d'air (60).

9. Procédé selon la revendication 8, **caractérisé en ce que** la zone de dépression est produite à l'extrémité située côté du hall de machines du volume interne d'une tour (10) et que la zone de surpression est produite à l'extrémité du volume interne de la tour située du côté opposé au hall de machines de sorte qu'un courant d'air s'établit de l'extrémité du volume interne située du côté opposé au hall de machines à l'extrémité située du côté du hall de machines.

10. Procédé selon la revendication 8 ou 9, **caractérisé en ce qu'**à travers un dispositif d'absorption passent d'une part pour l'absorption d'humidité, un courant d'air extrait du volume interne à travers une entrée d'air humide (53), d'autre part, pour recueillir l'humidité ainsi absorbée, un courant d'air de régénération provenant de l'extérieur à travers une entrée d'air de régénération (51) conduisant à ce dispositif d'absorption, l'air de régénération humide étant évacué à l'extérieur à travers une sortie d'air de régénération (52), cet air étant chauffé entre son entrée (51) et le dispositif d'absorption.
